# FASCICULE DE BREVET EUROPEEN

(11) **EP 3 225 092 B1**
(45) Date de publication et mention de la délivrance du brevet: **07.08.2019**
(21) Numéro de dépôt: 17163394.4
(22) Date de dépôt: 28.03.2017
(51) Int. Cl.: A01C 5/06

(54) **ELÉMENT SEMEUR POUR SEMOIR, À DISQUE OUVREUR AMÉLIORÉ, ET SEMOIR CORRESPONDANT**
SÄELEMENT FÜR SÄMASCHINE MIT VERBESSERTER SÄSCHEIBE, UND ENTSPRECHENDE SÄMASCHINE
SEEDING ELEMENT FOR SOWING MACHINE, WITH IMPROVED OPENER DISC, AND CORRESPONDING SOWING MACHINE

(30) Priorité: 30.03.2016 FR 1652737
(43) Date de publication de la demande: 04.10.2017
(73) Titulaire: Sulky Burel, 35220 Chateaubourg (FR)
(72) Inventeur: HAYOT, Mathieu, 35130 La Guerche de Bretagne (FR)
(74) Mandataire: Vidon Brevets & Stratégie

(56) Documents cités:
- EP-A1- 0 501 836
- WO-A1-2006/041360
- DE-B3-102006 062 328
- GB-A- 700 597
- US-A- 2 192 947

## Description

### 1. Le domaine de l'invention

Le domaine de l'invention est celui des machines agricoles destinées à déposer des particules dans des sillons, et en particulier celui de la réalisation de tels sillons. Ainsi, l'invention s'applique notamment aux semoirs et à la réalisation de sillons pour les semis et la distribution régulière, autant que faire se peut, de graines dans ces sillons. Plus généralement, l'invention peut s'appliquer à la réalisation de sillons pour la dépose de graines, engrais et/ou granulés (par exemple anti-limaces). Par simplification, les machines effectuant ces opérations sont appelées par la suite « semoirs », quel que soit le type de particules distribué.

Notamment, l'invention concerne les disques ouvreurs, ou disques de fissuration, réalisant ou participant à la réalisation de tels sillons.

### 2. Art antérieur

Les semoirs sont des dispositifs destinés à être attelés à un tracteur. Il présente généralement une pluralité d'éléments semeurs, montés perpendiculairement à l'axe d'avancement du tracteur. Chaque élément semeur est associé à un sillon. Il doit donc assurer la formation de ce sillon, la dépose des graines dans celui-ci, puis leur enterrage.

Chaque élément semeur comprend donc un disque ouvreur, sensiblement plat, associé à une rasette. Le disque ouvreur entame la formation du sillon, et la rasette maintient et élargit l'ouverture pour lui donner sa forme définitive, et assure la dépose de chaque graine dans le sol.

Le disque ouvreur est généralement disposé avec un angle faible, de l'ordre de 3° par exemple, par rapport à la direction d'avancement, de façon à protéger la rasette, en particulier des débris végétaux qui pourraient venir se loger entre la rasette et le disque.

Un exemple de semoir de ce type est par exemple décrit dans le document du brevet FR2855714. Classiquement, les disques ouvreurs de ces semoirs connus sont pleins, et leur périmètre définit un cercle sans aspérité. Un inconvénient de tels disques est que, en présence d'un terrain souple, ils peuvent ne plus être entraînés par le sol, lorsque le semoir avance. Ceci introduit des à-coups, et donc une rotation intermittente, qui provoquent des lâchées de graines en paquets, au niveau de la pointe de sortie de la rasette, et des bourrages en débris.

Pour améliorer la motricité du disque, le titulaire a proposé une technique décrite notamment dans le document de brevet EP1815730. Selon cette approche, les disques ouvreurs sont équipés de crans présentant des encoches en portion de cercle d'une profondeur de l'ordre de 17 millimètres. Cette approche permet d'améliorer la rotation du disque dans un sol souple. En revanche, en présence d'un terrain très dur, par exemple à cause d'une sécheresse ou d'un sol tassé, le disque peut ne pas pénétrer dans le sol. Dans ce cas, les graines se retrouvent déposer sur la surface du sol, et ne peuvent pas germer. Un autre exemple de disque de ce type est décrit dans le document WO2006041360.

Il existe, par ailleurs, d'autres types de disques qui ne sont pas des disques ouvreurs, mais des disques de travail du sol, tels que ceux décrits, par exemple, dans le document de brevet US2011192618.

Il s'agit ici de travailler et relever la terre. Pour ceci, les disques présentent des dents de grande profondeur, dont les pointes pénètrent en premier dans la terre, à la manière des lames de scie. Avec ce type de disques, la terre est travaillée, et remuée, et partiellement éjectée hors du sol lorsque les dents sortent de celui-ci. Ceci est efficace pour le travail du sol, mais bien sûr non adapté au semis, puisque les graines seraient également projetées en l'air par le mouvement, ce qui va à l'encontre du besoin de réalisation de sillons de profondeur régulière et de déposes à des intervalles réguliers des graines. En semis direct, il est également important de remuer le moins possible le sol pour ne pas faire germer de « mauvaises graines ».

Un autre exemple de disque de travail du sol est illustré par le document GB700597. Ce disque est fortement incliné, par rapport au sol, de façon à former un sillon. Il est adapté pour former le V du sillon, l'inclinaison du disque correspondant sensiblement à la direction d'une des ailes du V, et à relever la terre avant d'y déposer les graines. A nouveau, cette solution travaille et remue fortement la terre, ce qui oblige à décaler de façon importante vers l'arrière les moyens de distribution de graines. Ces moyens de distribution doivent être éloignés du disque de travail de la terre.

L'invention ne se place pas dans le cadre de telles approches, mais a pour but d'améliorer la mise en oeuvre d'une rasette associée à et protégée par un disque ouvreur.

Comme précisé plus haut, il est important de distinguer les disques ouvreurs, qui ont pour fonction de fissurer le sol avant que la rasette ne forme le sillon (ce dernier étant amélioré par la fissure que vient de former le disque ouvreur) et les disques de travail du sol, qui peuvent notamment former eux-mêmes un sillon.

Il existe en effet un besoin d'amélioration de la réalisation des sillons et de la dépose des graines à l'aide d'un système combinant disque ouvreur et rasette, quelque soit le type de sol, et en particulier qu'il soit souple ou dur, sans remuer fortement la terre, ni éjecter ou déplacer les graines, ou encore déposer des débris.

### 3. Exposé de l'invention

L'invention répond à ce besoin en proposant un élément semeur pour semoir, comprenant un disque ouvreur et une rasette, ladite rasette présentant une lame de formation d'un sillon et un élément distributeur de graines.

Selon l'invention, ledit disque présente une surface pleine, dite disque intérieur, se prolongeant par une couronne périphérique portant une série de dents asymétriques, présentant une arête d'entrée, première portion de la dent à entrer en contact avec la terre, et une arête de sortie, dernière portion de la dent à sortir de la terre.

L'angle formé entre une première droite définie par ladite arête d'entrée et une tangente au périmètre dudit disque intérieur au point de croisement avec ladite première droite est inférieur à 20°, ledit périmètre du disque intérieur étant défini par un cercle passant par la partie inférieure desdites dents, et ladite rasette s'étend sensiblement verticalement à l'arrière de l'axe de rotation du disque ouvreur, la base dudit élément distributeur de graines affleurant avec ledit disque intérieur.

Un tel disque ouvreur pénètre de façon efficace dans le sol, que celui-ci soit souple, humide ou au contraire dur, sans remuer la terre. En effet, le disque ne se comporte pas comme une lame de scie, l'arête d'entrée étant très inclinée. La dent est poussée dans le sol, avec un effet « autopénétrant » du fait de la rotation du disque.

Cette approche permet d'obtenir, par la combinaison du disque ouvreur et de la lame de formation du sillon de la rasette, un sillon régulier et bien formé en toutes circonstances. En particulier, la structure particulière de ce disque permet d'améliorer la fissuration du sol dans les premiers centimètres sous la graine, ce qui assure un meilleur développement des plantes, par exemple du colza.

Selon un mode de réalisation particulier, l'angle formé entre une deuxième droite définie par ladite arête de sortie et une tangente audit disque intérieur au point de croisement avec ladite deuxième droite est compris entre 60° et 85°.

Ainsi, lorsque la dent sort du sol, une ouverture importante est définie, permettant un dégagement efficace des débris éventuels, qui ne sont pas entrainés.

On peut noter que la notion d'arête ne suppose pas, dans le cadre du présent brevet, que les « arêtes » d'entrée et/ou de sortie soient parfaitement rectilignes sur toute leur longueur, tout en suivant essentiellement une direction correspondant à ce que serait l'arête rectiligne. Il n'est pas impossible de prévoir des dentures ou des encoches faibles (quelques millimètres), voire des défauts de linéarité. Dans ce cas, l'arête au sens des revendications s'interprète comme la portion de droite passant au plus prêt de l'ensemble des points de la portion de dent considérée, selon une régression linéaire.

Selon un aspect particulier, la distance entre deux dents successives est comprise entre 45 et 75 mm.

Selon un autre aspect particulier, la profondeur d'une dent est comprise entre 15 et 40 mm.

Selon un mode de réalisation particulier, lesdites dents sont tronquées, la pointe desdites dents présentant une partie plane sensiblement tangentielle audit disque.

Ceci permet de réduire l'usure du disque, par rapport à une pointe non tronquée.

Selon un mode de réalisation particulier, la longueur de la partie plane de la pointe représente entre 10 et 20 % de la distance entre deux dents successives.

Selon une caractéristique particulière, ladite rasette est montée de façon à s'inscrire dans la zone définie par ledit disque intérieur, sans pénétrer dans ladite couronne périphérique.

La sortie de la rasette est ainsi protégée.

Notamment, la base dudit élément distributeur de graines peut affleurer avec un cercle passant par la partie inférieure desdits dents.
Selon un mode de réalisation particulier, ledit disque semeur présente un disque intérieur dont le rayon est sensiblement égal au rayon d'un disque plein, façon que ledit disque semeur et ledit disque plein puissent être interchangés sans nécessiter de réglage dudit élément semeur.

Le disque ouvreur de l'invention peut en effet venir en remplacement d'un disque de type connu, sans modification de l'élément semeur. Il est également possible de choisir un disque selon l'invention ou un disque standard, selon les conditions et les besoins.

L'invention concerne également les semoirs comprenant au moins un élément semeur tels que décrits ci-dessus, ainsi que les disques ouvreurs tels que décrits ci-dessus, en tant que tels.

### 4. Liste des figures

D'autres caractéristiques et avantages de l'invention apparaîtront plus clairement à la lecture de la description suivante d'un mode de réalisation de l'invention, donné à titre de simple exemple illustratif et non limitatif, et des dessins annexés parmi lesquels :
- les figures 1A et 1B illustrent un élément semeur, respectivement avec un disque à bord lisse selon l'art antérieur (figure 1A) et d'un disque selon l'invention (figure 1B) ;
- La figure 2A illustre un disque de fissuration selon l'invention, associé à une rasette, vu de côté, et les figures 2B et 2C sont deux vues agrandies d'une dent du disque de la figure 2A ;
- La figure 3 illustre le disque de la figure 2A, en vue partielle arrière.

### 5. Description d'un mode de réalisation de l'invention

### 5.1 Exemples d'éléments semeur

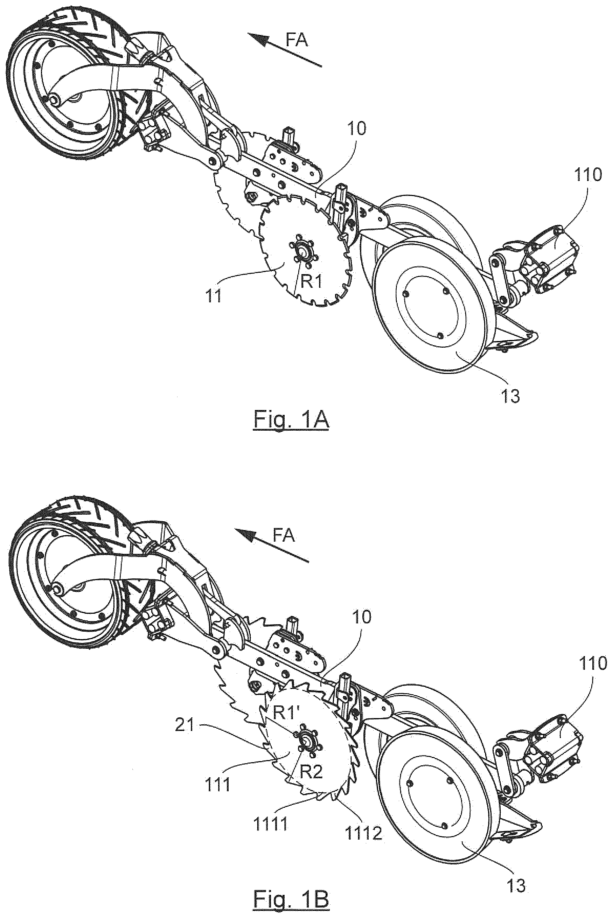

La figure 1A illustre donc un exemple d'éléments semeurs selon l'art antérieur. Pour mémoire, un semoir présente une pluralité de tels éléments semeurs, alignés perpendiculairement à l'axe d'avancement du tracteur.

En l'occurrence deux éléments semeurs sont, selon ce mode de réalisation, associés sur un support 10, lui-même relié à une traverse 110 solidaire du châssis de la machine. Différents moyens autorisant un déplacement par rapport à cette traverse sont classiquement prévus, pour s'adapter aux variations du terrain, et à la présence éventuelle de pierres.

Chaque élément semeur comprend donc un disque ouvreur, ou disque de fissuration, 11, fissurant le sol, et traçant le sillon. Il porte également une rasette (non visible sur cette figure, montée à proximité du disque 11, et s'étendant sensiblement verticalement à l'arrière de l'axe de rotation du disque 11. Cette rasette présente sur sa partie avant une lame de section sensiblement en V, qui élargit et maintient le sillon ouvert, pour lui donner sa forme classique en V. La rasette présente, à son arrière, une portion de dépose de graines, venant déposer au fond du sillon les graines reçues et distribuées via des moyens de dosage et de transport adaptés (non représentés).

Dans le paragraphe qui précède, et dans la suite de la description, les termes « arrière » et « avant » sont définis par rapport au sens d'avancement (flèche FA).

L'élément semeur porte également une roue enterreuse 13, qui recouvre le sillon, pour enterrer les graines qui viennent d'être déposées dans le sillon.

Selon l'invention, le disque ouvreur 11 classique de la figure 1A est remplacé par un disque 111 portant une série de dents 21, comme illustré sur la figure 1B. Les spécificités de ces dents sont décrites ci-après.

Selon l'invention, seul le disque 111 diffère du disque 11. Ainsi, il est possible de remplacer le disque 11 par un disque 111, sur un élément semeur existant, sans autre adaptation ni réglage, et un agriculteur peut choisir, selon les conditions, l'un ou l'autre des disques.

On note ici que le disque 111 présente un rayon R2 supérieur au rayon R1 du disque classique 11 de la figure 1A Plus précisément, le disque de l'invention 111 peut être décomposé en une portion pleine, formant disque intérieur 1111, défini par un périmètre dont le rayon R1' est égal, ou très proche, du rayon R1 du disque classique. Il présente, en outre, une couronne périphérique 1112, portant les dents 21, de sorte que le rayon R2 est augmenté sensiblement de la hauteur de ses dents, par exemple de l'ordre de 2 à 3 cm, 2,5 cm dans l'exemple illustré. Le périmètre du disque intérieur est défini par le cercle passant par le creux des dents 21 (plus précisément par le point le plus proche du centre du disque du creux de ces dents). Il est à noter que ce cercle n'a pas de fonction technique particulière, mais est utile pour définir la position et/ou la forme caractéristique des dents.

Comme mentionné ci-dessus, aucun réglage n'est nécessaire, en cas de remplacement des disques. La pointe de la rasette, c'est-à-dire sa partie la plus basse, affleurait avec la périphérie du disque 11, sur la figure 1A, et elle affleure donc avec le bord du disque intérieur 1111, sur la figure 1B, ou encore avec le creux des dents.

### 5.2 Description d'un exemple de disque de fissuration selon l'invention

L'invention propose donc un nouveau type de disque de fissuration, améliorant la pénétration dans tout type de terrain, sans pénaliser les autres fonctions utiles au bon fonctionnement du semoir (formation du sillon et mise en place des graines notamment).

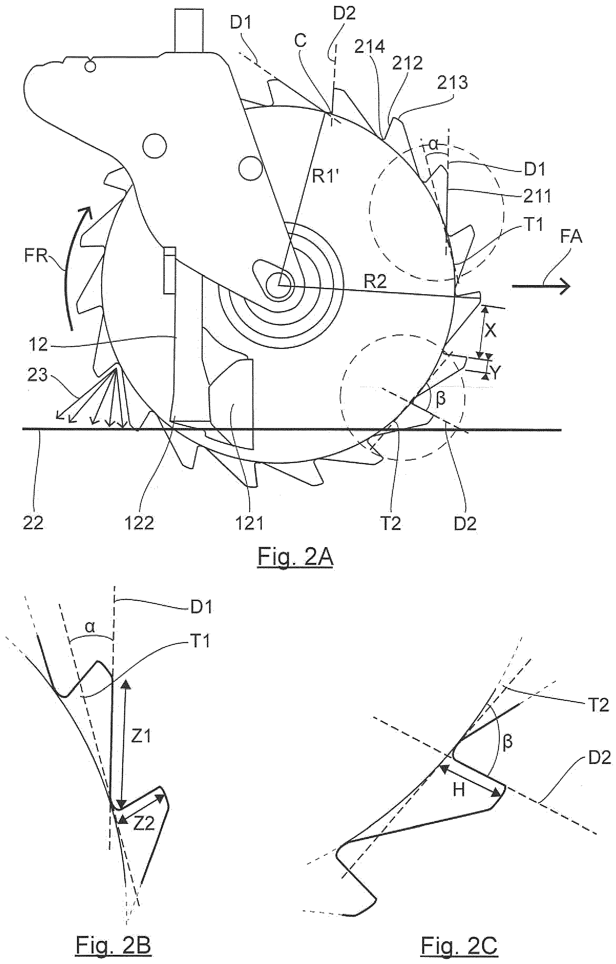

Comme illustré sur la figure 2, le disque 11 porte une série de dents 21, en l'occurrence 19 dents. Ces dents sont asymétriques. Elles présentent une arête d'entrée 211 plus longue que l'arête de sortie 212. On appelle ici « arête d'entrée » l'arête de la dent qui est la première à pénétrer dans la terre, en considérant le sens d'avancement FA, et donc le sens de rotation FR, et « arête de sortie » l'arête qui est la dernière à sortir de la terre. Le sol est représenté par la droite 22.

Le terme « arête » désigne donc un bord physique de la dent, qui est rectiligne, ou essentiellement rectiligne.

L'arête d'entrée et l'arête de sortie se rejoignent au niveau de la pointe 213 de la dent, qui peut être tronquée, et présenter une surface plane ou sensiblement plane, et sensiblement perpendiculaire à un rayon du disque. Ceci permet de limiter l'usure des dents, en particulier en présence d'un sol sablonneux.

Le creux 214 de la dent correspond à un point du périmètre du disque intérieur. Il se trouve donc à une distance R1' du centre du disque.

Selon l'invention, l'angle α formé par une droite D1 définie par l'arête d'entrée 211 d'une dent et une tangente T1 au disque intérieur 111, au point de croisement avec la droite D1, est inférieur à 30°, et notamment compris entre 10 et 30°. Sur l'exemple de la figure 2, il vaut environ 18°.

On note donc ici que l'arête d'entrée 211 est relativement longue et inclinée, de façon que ce soit cette arête (et non la pointe 213 de la dent) qui pénètre progressivement dans le sol, à la manière de la lame d'un couteau. La dent est poussée dans le sol.

On obtient ainsi une action « auto-pénétrante » de la dent par la rotation du disque. En pénétrant ainsi dans le sol, on forme une première ouverture progressive, de largeur réduite, sans perturber ni déplacer fortement la terre. L'approche s'oppose à celle d'un outil de travail du sol, et plus généralement d'une lame de scie rotative, dans lesquelles c'est la pointe d'une dent qui entre en contact en premier avec le sol.

Il est intéressant de noter ici que, malgré des similitudes de forme de dents, l'approche est différente de, et opposée à, celle proposée dans le document GB700597, dont le disque a pour fonction de former un sillon. Ce disque de type connu doit donc être incliné d'environ 20 à 30° par rapport à la verticale, pour travailler le sol et créer le V du sillon. En revanche, selon l'invention, le disque est vertical, ou pratiquement vertical (il peut le cas échéant former un angle très faible, par exemple de 3°, avec la verticale). Il n'est bien sûr pas évident, pour l'homme du métier, de s'inspirer de la forme d'un disque antérieur ayant une fonction différente et générant les inconvénients qu'il souhaite justement éviter, pour l'adapter et en faire un disque ouvreur selon l'invention. Au contraire, cette technique ancienne, nécessitant de décaler la distribution des graines, dissuadait immédiatement l'homme du métier d'envisager cette approche.

L'angle β formé entre une deuxième droite D2 définie par l'arête de sortie 212 et une tangente T2 au disque intérieur au point de croisement avec cette droite D2 est compris entre 60 et 85°. Sur l'exemple de la figure 2, il vaut environ 74°.

Ceci permet que lorsque la dent sort du sol, les arêtes d'entrée et de sortie définissent un cône 23 fortement ouvert, permettant un dégagement efficace des débris éventuels, qui ne sont pas entraînés par les dents. On note ici que, en particulier, l'arête d'entrée 211 reste en retrait par rapport à la verticale au moment de la sortie de la dent. La dent s'échappe ainsi aisément du sol, derrière la rasette, sans remontée de terre, de résidus ou de graines.

Dans le mode de réalisation illustré :
- la hauteur H d'une dent est de l'ordre de 25 mm. Plus généralement, elle peut être comprise entre 15 et 40 millimètres ;
- la longueur X d'une dent est de 60 mm. Plus généralement elle peut par exemple être comprise entre 45 et 75 mm ;
- la longueur Y de la portion plane de la pointe 213 est de 14 mm. Plus généralement, elle peut être comprise entre 5 et 25 mm ;
- la longueur Z1 de l'arête d'entrée 211 est de 70 mm. Plus généralement elle peut être comprise entre 60 et 80 mm ;
- la longueur Z2 de l'arête de sortie 212 est de 25 mm. Plus généralement elle peut être comprise entre 15 et 35 mm ;
- le rayon R1 du disque intérieur est de 394 mm. Plus généralement, il peut être compris entre 385 et 405 mm ;
- le rayon R2 du disque complet, incluant les dents est de 450 mm. Plus généralement, il peut être compris entre 440 et 460 mm.

Ces valeurs et plages sont bien sûr données à titre d'exemple. En particulier, il est possible de les faire varier en appliquant une homothétie sur le disque, modifiant globalement les côtes sans modifier les formes.

Les formes des dents peuvent être légèrement modifiées, et il est notamment possible que l'arête d'entrée et/ou l'arête de sortie ne soit pas parfaitement rectiligne, mais concave ou convexe. Dans ce cas, les droites D1 et D2 les caractérisant sont des droites passant par les deux extrémités de ces arêtes.

La rasette 12 s'inscrit intégralement dans la surface du disque intérieur 111. Elle comprend un canal d'alimentation en graines, vertical (notamment pour éviter que la chute des graines soit perturbée par des contacts ou des glissements le long de parois), placé sensiblement à égale distance du centre et du périmètre du disque intérieur, au moins au niveau de l'horizontale passant par ce centre du disque.

La lame 121 de la rasette pénètre dans le sol d'une profondeur inférieure à la profondeur de pénétration du disque intérieur 111. Cette lame 121 agit dans le sol pour former le sillon simultanément à la remontée des dents pour sortir du sol. En d'autres termes, un ou deux centimètres après la verticale au centre du disque, dans le sens d'avancement FA, la lame 121 entre en action.

L'élément 122 de distribution de graines affleure avec le périmètre du disque 111, quelques millimètres au-dessus du sol, au voisinage de la zone de sortie des dents. On note que le cône de sortie 23 est cependant suffisamment éloigné pour que la graine soit déposée sans que la terre ou d'autres éléments s'échappant de la dent sortant du sol ne perturbe la dépose de la graine : le sillon formé est régulier, et ce qui est issu du cône de sortie 23 vient le cas échéant couvrir la graine, mais non modifier la zone dans laquelle elle est déposée.

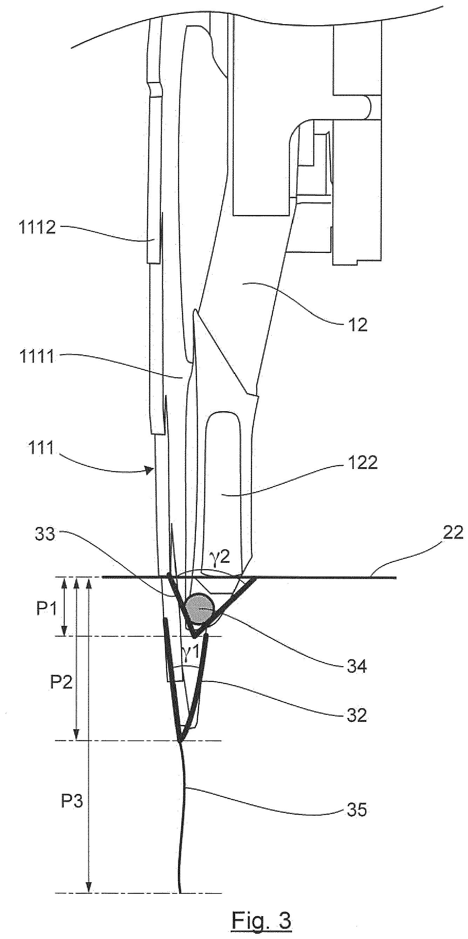

Comme on le voit sur la figure 3, qui est une vue arrière du disque de l'invention et de la rasette 12, le disque 111 est perpendiculaire au sol 22.

Les dents 21 créent progressivement, en pénétrant dans le sol une fissure en profondeur 32, avec un angle γ1 faible, par exemple de 15 à 25°, qui se prolonge en profondeur (35) dans le sol, et qui permet d'améliorer la qualité d'implantation des racines, qui peuvent aller rechercher l'humidité présente en profondeur dans le sol.

La rasette 12 forme, quant à elle, un sillon de rasette 33, présentant un angle de γ2 plus ouvert que l'angle γ1, par exemple de 50 à 75°, mais moins profond que la fissure réalisée par le disque, et dépose la graine 34 au fond de ce sillon de 33.

Ainsi, la dent du disque pénètre plus en profondeur que l'emplacement de dépose de la graine, de 20 à 40 mm, 30 mm par exemple.

Selon l'invention, on combine la mise en oeuvre de deux éléments pour former le sillon le mieux adapté en toute circonstance :
- le disque ouvre, ou fissure le sol, de façon relativement profonde : les dents pénètre dans le sol de 20 à 40 mm, et une fissure 32 est formée plus profondément ;
- la rasette forme le V du sillon, en élargissant la partie supérieure de l'ouverture créée par le disque, et définie une zone de dépose de la graine, par exemple entre 10 et 15 mm sous le niveau du sol.

En d'autres termes, on forme dans le sol, en partant du niveau du sol :
- une zone 33 de dépose de la graine 34, correspondant au sillon proprement dit, ayant une ouverture γ2, sur une profondeur P1 de 10 à 15 mm ;
- une fissure 32 formée sous le sillon 33 par les dents du disque, sur une profondeur P2 de 20 à 40 mm ;
- un prolongement 35 de la fissure, par exemple jusqu'à 60 ou 80 mm.

## Revendications

1. Elément semeur pour semoir, comprenant un disque ouvreur (111) et une rasette (12), ledit disque ouvreur fissurant le sol et traçant un sillon et ladite rasette élargissant et maintenant l'ouverture dudit sillon, ladite rasette présentant une lame (121) de formation d'un sillon et un élément (122) distributeur de graines,
ledit disque (111) présentant une surface pleine (1111), dite disque intérieur, se prolongeant par une couronne périphérique (1112) portant une série de dents (21) asymétriques, présentant une arête d'entrée (211), première portion de la dent à entrer en contact avec la terre, et une arête de sortie (212), dernière portion de la dent à sortir de la terre,
l'angle (α) formé entre une première droite (D1) définie par ladite arête d'entrée (211) et une tangente (T1) au périmètre dudit disque intérieur au point de croisement avec ladite première droite (D1) étant inférieur à 20°, ledit périmètre du disque intérieur étant défini par un cercle passant par la partie inférieure desdites dents (21),
ladite rasette s'étendant sensiblement verticalement à l'arrière de l'axe de rotation du disque ouvreur (111), la base dudit élément (122) distributeur de graines affleurant avec le périmètre dudit disque intérieur.

2. Élément semeur selon la revendication 1, **caractérisé en ce que** l'angle (β) formé entre une deuxième droite (D2) définie par ladite arête de sortie (212) et une tangente (T2) au périmètre dudit disque intérieur (1111) au point de croisement avec ladite deuxième droite (D2) est compris entre 60° et 85°.

3. Élément semeur selon la revendication 1, **caractérisé en ce que** la distance (X) entre deux dents (21) successives est comprise entre 45 et 75 mm.

4. Elément semeur selon la revendication 1, **caractérisé en ce que** la profondeur (H) d'une dent (21) est comprise entre 15 et 40 mm.

5. Elément semeur selon la revendication 1, **caractérisé en ce que** lesdites dents (21) sont tronquées, la pointe (213) desdites dents (21) présentant une partie plane sensiblement tangentielle audit disque (111).

6. Elément semeur selon la revendication 5, **caractérisé en ce que** la longueur (Y) de la partie plane de la pointe (213) représente entre 10 et 20 % de la distance entre deux dents (21) successives.

7. Semoir comprenant une pluralité d'éléments semeurs selon l'une quelconque des revendications 1 à 6.

## Patentansprüche

1. Säelement für eine Sämaschine, umfassend eine Öffnungsscheibe (111) und einen Vorschäler (12), wobei die Öffnungsscheibe den Boden spaltet und eine Furche anreißt und der Vorschäler die Öffnung der Furche verbreitert und aufrechterhält, wobei der Vorschäler ein Messer (121) zum Bilden einer Furche und ein Saatgutverteilerelement (122) aufweist, wobei die Scheibe (111) eine volle Fläche (1111), die so genannte innere Scheibe, aufweist, die in einen Umfangskranz (1112) übergeht, der eine Reihe von asymmetrischen Zähnen (21) trägt, die eine Eintrittskante (211), wobei es sich um den ersten Abschnitt des Zahns, der in Kontakt mit der Erde tritt, handelt, und eine Ausgangskante (212) wobei es sich um den letzten Abschnitt des Zahns, der aus der Erde austritt, handelt, aufweisen, wobei der zwischen einer durch die Eintrittskante (211) definierten ersten Geraden (D1) und einer Tangente (T1) zum Umfang der inneren Scheibe bis zum Schnittpunkt mit der ersten Geraden (D1) gebildete Winkel (α) kleiner als 20° ist, wobei der Umfang der inneren Scheibe durch einen Kreis definiert ist, der durch den unteren Teil der Zähne (21) geht, wobei sich der Vorschäler im Wesentlichen vertikal zur Rückseite der Drehachse der Öffnungsscheibe (111) erstreckt, wobei das Saatgutverteilerelement (122) mit dem Umfang der inneren Scheibe bündig ist.

2. Säelement nach Anspruch 1, **dadurch gekennzeichnet, dass** der zwischen einer durch die Austrittskante (212) definierten zweiten Geraden (D2) und einer Tangente (T2) zum Umfang der inneren Scheibe (1111) bis zum Schnittpunkt mit der zweiten Geraden (D2) gebildete Winkel (β) zwischen 60° und 85° liegt.

3. Säelement nach Anspruch 1, **dadurch gekennzeichnet, dass** der Abstand (X) zwischen zwei aufeinanderfolgenden Zähnen (21) zwischen 45 und 75 mm beträgt.

4. Säelement nach Anspruch 1, **dadurch gekennzeichnet, dass** die Tiefe (H) eines Zahns (21) zwischen 15 und 40 mm beträgt.

5. Säelement nach Anspruch 1, **dadurch gekennzeichnet, dass** die Zähne (21) trunkiert sind, wobei die Spitze (213) der Zähne (21) einen im Wesentlichen tangential zu der Scheibe (111) verlaufenden ebenen Teil aufweist.

6. Säelement nach Anspruch 5, **dadurch gekennzeichnet, dass** die Länge (Y) des ebenen Teils der Spitze (213) zwischen 10 und 20% des Abstands zwischen zwei aufeinanderfolgenden Zähnen (21) darstellt.

7. Sämaschine, umfassend eine Mehrzahl von Säelementen nach einem der Ansprüche 1 bis 6.

## Claims

1. Sower element for a seeder, comprising an opener disc (111) and a furrow closer (12), said opener disc splitting the soil and tracing a furrow and said furrow closer expanding and maintaining the opening of said furrow, said furrow closer having a blade (121) for forming a furrow and an element (122) for distributing seeds, said disc (111) having a solid surface (1111), called interior disc, being extended by a peripheral crown (1112) carrying a series of asymmetrical teeth (21), having an inlet edge (211), first portion of the tooth to come into contact with the earth, and an outlet edge (212), last portion of the tooth to exit the earth, the angle (α) formed between a first straight line (D1) defined by said inlet edge (211) and a tangent (T1) to the perimeter of said interior disc at the intersection point with said first straight line (D1) being less than 20°, said perimeter of the interior disc being defined by a circle passing through the lower portion of said teeth (21), said furrow closer extending substantially vertically to the rear of the axis of rotation of the opener disc (111), the base of said element (122) for distributing seeds flush with the perimeter of said interior disc.

2. Sower element according to claim 1, **characterised in that** the angle (β) formed between a second straight line (D2) defined by said outlet edge (212) and a tangent (T2) to the perimeter of said interior disc (1111) to the intersection point with said second straight line (D2) is between 60° and 85°.

3. Sower element according to claim 1, **characterised in that** the distance (X) between two successive teeth (21) is between 45 and 75mm.

4. Sower element according to claim 1, **characterised in that** the depth (H) of a tooth (21) is between 15 and 40mm.

5. Sower element according to claim 1, **characterised in that** said teeth (21) are truncated, the tip (213) of said teeth (21) having a flat portion substantially tangential to said disc (111).

6. Sower element according to claim 5, **characterised in that** the length (Y) of the flat portion of the tip (213) represents between 10 and 20% of the distance between two successive teeth (21).

7. Seeder comprising a plurality of sower elements according to any one of claims 1 to 6.
